# EUROPEAN PATENT SPECIFICATION

(11) **EP 4 015 590 B1**
(45) Date of publication and mention of the grant of the patent: **01.11.2023**
(21) Application number: 20315498.4
(22) Date of filing: 18.12.2020
(51) Int. Cl.: C09D 11/18, C09D 11/17, C09D 11/50

(54) **COLOR-CHANGE INK**
FARBWECHSELTINTE
ENCRE À CHANGEMENT DE COULEUR

(43) Date of publication of application: 22.06.2022
(73) Proprietor: Société BIC, 92110 Clichy (FR)
(72) Inventor: CAFFIER, Guillaume F., 68290 Wegscheid (FR); LIU, Wing-yam, 77144 Montévrain (FR)
(74) Representative: Peterreins Schley

(56) References cited:
- WO-A1-98/42788
- CN-A- 106 833 123
- US-A- 4 227 930
- US-A1- 2005 192 379

## Description

### Field of the Present Disclosure

The present disclosure concerns the field of writing instruments, in particular high laydown pens such as ball-pens, and writing inks for use in such writing instruments. The writing inks comprise an erasable component and may be discolored or changed in color by application of an eradicator composition.

### Background of the Present Disclosure

A ballpoint pen is a writing instrument which features a tip that is automatically refreshed with ink. It consists of a precisely formed metal ball seated in a socket below a reservoir of ink. As the pen is moved along a writing surface, the ink is delivered onto the paper.

An ink for such a ballpoint pen must be suitably formulated. To give an example: When the ink viscosity is high, the ball rotational resistance at writing tends to become large and the act of writing begins to feel very heavy-handed. On the contrary, when the ink viscosity is low, writing smoothness is generally better but inconveniences like ink spill-out and blobbing during writing may occur. Thus, it is necessary to balance the ink properties. The aforementioned example is simplified since, in practice, both dynamic and static aspects of viscosity - or, more generally, the rheological properties - need to be balanced: Conventionally, ballpoint pen inks are Newtonian high viscosity non-aqueous solvent based inks. While such non-aqueous solvent-based systems are desirable for their long shelf-life, they are typically also endowed with high shear viscosity. Again, high shear viscosity is per se not an undesirable property since it helps avoiding static leakage. Static leakage corresponds to the ink drop formation on the point when the pen is stored pointing downwards, especially in hot and humid condition. In a Newtonian system, the high shear viscosity also correlates with a viscosity at rest, and, thus, helps in reducing the problem of settling out of pigments and other solids which may clog the pen point. However, with high shear viscosities, the writing experience is not as smooth as the consumer would want. It turned out that balancing these properties was exceedingly difficult.

In order to solve some of these problems, the formulator also turned to gel inks. In general, gel inks are water based and have a pseudoplastic rheological profile. They are a good compromise between low static leakage, smoothness and particle stabilization. However, they still suffer from several drawbacks: Water is a low-molecular-weight and volatile solvent. When stored without point protection (cap or hotmelt), the ink in the point can dry and clog the point. Moreover, the cap-off time of gel-ink based pens was found to be much lower as cap-off time of solvent-based ball pens. Despite the use of corrosion inhibitors, water-based inks remain corrosive fluids. It is therefore impossible to use brass points and it is mandatory to use stainless steel points which are quite expensive materials and difficult to manufacture due to material hardness. Thus, water-based inks also have their unique problems and may not adequately address the aforementioned difficulties.

A further consideration in designing and balancing the properties of an ink composition is the proper selection of the dye. This is challenging in the case of erasable dyes or color-changing inks. Erasable dyes are dyes that can be converted to a colorless or nearly colorless form when contacted with a decoloring substance such as a sulfite reducing agent or an amine. Color-changing inks are similar to erasable dyes but contain a second (permanent) dye component such that a color impression remains after the erasable dye component is decolored by the decoloring substance. The decoloring substance is typically formulated is an aqueous eradicator fluid and applied onto the dried writing to decolorize the dye. To ensure a fast and reliable decoloring reaction between the dye and the decoloring substance, it is helpful when the dye is water-soluble to facilitate mixing with an aqueous eradicator fluid. This limits the design choices in essentially non-aqueous solvent-based inks since the dye should have good solubility in water and should also be sufficiently solubilizable or at least homogeneously suspendable in the solvent of the non-aqueous solvent-based ink to obtain a vivid color impression in the written dried ink. In addition, the rheological system should be adjusted accordingly.

Finally, also the type of writing instrument has to be taken into consideration: Besides conventional ball point pens, there are also commercialized pens which have high laydown tips. Such pens generally dispense a larger amount of ink in a smoother writing action since the ball clearance is higher than in conventional ball point pens. However, in such pens, the rheologic system needs to be re-balanced to accommodate for the increase in ball clearance.

Presently, there is still room for further improvement of erasable or color-changeable non-aqueous solvent-based inks for ink pens. The present disclosure aims at solving at least part of the aforementioned issues. In particular, but not exclusively, the present disclosure aims at achieving an erasable or color changing composition with a water soluble dye which has a good color intensity while allowing a high laydown thanks to a high laydown point without facing leakage issues.

### Summary of the Present Disclosure

In a first aspect, the present disclosure relates to a non-aqueous writing ink. The writing ink comprises a solvent, a gelling agent and a pH-sensitive water-soluble dye. The solvent is selected from 1,2-propanediol, diethylene glycol, monoethylene glycol and dimethylsufoxide and/or mixtures thereof. The gelling agent comprises water-insoluble cellulose nanofibers. Alternatively, the gelling agent comprises a mixture of silica particles and of at least one a fatty acid amide wax. Still alternatively, the gelling agent comprises both water-insoluble cellulose nanofibers and a mixture of silica particles and of at least one fatty acid amide wax. The pH-sensitive water-soluble dye is capable of changing from an initially colored state to a discolored state when the writing ink is exposed to an ink eradicator composition or a pH-change, more specifically a pH increase, more specifically a pH increase to a value of more than 9.0, in particular of more than 9.5.

In a second aspect, the present disclosure relates to a writing instrument. The writing instrument may comprise the non-aqueous writing ink as defined for any of the embodiments of the first aspect of the present disclosure. The writing instrument may be configured to dispense less than about 50 mg of the non-aqueous writing ink per 150 meter of writing.

### Detailed Description of the Present Disclosure

Hereinafter, a detailed description will be given of the present disclosure. The terms or words used in the description and the claims of the present disclosure are not to be construed limitedly as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

In a first aspect, the present disclosure relates to a non-aqueous writing ink.

In this context, non-aqueous means in particular that the ink does not comprise water as a solvent for dyes/pigments and/or may be substantially free (e.g. containing less than about 5 wt.-% with respect to the total weight of the ink) or free of water. In some embodiments, the non-aqueous writing ink may comprise less than about 2 wt.-% water, and in particular less than about 0.5 wt.-% water; relative to the total weight of the writing ink.

The non-aqueous writing ink further comprises a solvent. The solvent is selected from 1,2-propanediol, diethylene glycol, monoethylene glycol and dimethylsufoxide and/or mixtures thereof. In some embodiments, it may be particularly advantageous when the solvent is selected from 1,2-propanediol, diethylene glycol and monoethylene glycol. In some embodiments, it may be most advantageous when the solvent is 1,2-propanediol. In some embodiments, the non-aqueous writing ink may comprise more than about 60 wt.-%, more specifically more than about 65 wt.-% and in particular more than about 70 wt.-% of the solvent, relative to the total weight of the writing ink.

The non-aqueous writing ink further comprises a gelling agent and a pH-sensitive water-soluble dye. The pH-sensitive water-soluble dye is capable of changing from an initially colored state to a discolored state when the writing ink is exposed to an ink eradicator composition or a pH-change, more specifically a pH increase, more specifically a pH increase to a value of more than 9.0, more specifically of more than 9.5.

The inventors of the present disclosure have surprisingly found that pH-sensitive water-soluble dyes are sufficiently soluble in select solvents, namely 1,2-propanediol, diethylene glycol, monoethylene glycol and dimethylsufoxide and/or mixtures thereof. Equally surprisingly, the non-aqueous writing ink has excellent rheologic properties if formulated with specific gelling agents. The gelling agent may comprise water-insoluble cellulose nanofibers. Alternatively, the gelling agent may comprise a mixture of silica particles and of at least one fatty acid amide wax. Still alternatively, the gelling agent may comprise both water-insoluble cellulose nanofibers and a mixture of silica particles and of a fatty acid amide wax.

In context of the present disclosure, the term "pH-sensitive water-soluble dye" is not particularly limited and intended to in particular refer to a dye which is capable of changing its color or capable of discoloring depending on the pH. In a specific embodiment, the pH-sensitive water-soluble dye is capable of discoloring depending on the pH. Specifically, the pH-sensitive water-soluble dye may be capable of changing from a colored state to a discolored state when exposing the dye to a more alkaline environment. Furthermore, the pH-sensitive dye is water-soluble. The term "water-soluble" is in this context is not particularly limited and intended to in particular refer to a dye which dissolves in distilled water in sufficient quantity to cause a significant color change in the aqueous phase at 25° C. In some embodiments, the pH-sensitive water-soluble dye may have a solubility in distilled water at about 25 °C of more than about 50 g/L.

Furthermore, in some embodiments, the pH-sensitive water-soluble dye may in particular be capable of changing from an initially colored state to a discolored state when the writing ink is exposed to a pH-change, more specifically in response to a pH increase, more specifically in response to a pH increase to a value of more than 9.0, more specifically of more than 9.5. Such a pH-change may be caused by applying an ink eradicator composition. Ink eradicator compositions, in particular aqueous ink eradicator compositions, are well-established in the art.

The term is not particularly limited and intended to in particular refer to compositions comprising an alkaline agent or a reducing agent. Non-limiting examples of alkaline agents include amines and carboxylic acid salts such as sodium glycinate and non-limiting examples of reducing agents include sulfites and bisulfites. In some embodiments, it may be advantageous that the ink eradicator composition comprises a sulfite, a bisulfite, an amine or mixtures thereof. Exemplary amines include: an aliphatic C₁-C₆-amine, in particular non-hydroxylated aliphatic C₁-C₄-amines such as methylamine, dimethylamine, diethylamine and triethylamine.

Accordingly, in some embodiments, the ink eradicator composition may be an aqueous ink eradicator composition. In some embodiment, it may be advantageous that the ink eradicator composition is an aqueous ink eradicator composition having a pH-value of more than about 9.0, more specifically of more than 9.5. In some embodiment, it may be advantageous that the ink eradicator composition is an aqueous ink eradicator composition having a pH-value of more than about 9.0, more specifically of more than 9.5, and comprising a sulfite, a bisulfite, an amine or mixtures thereof.

In some embodiments, the pH-sensitive water-soluble dye is capable of changing from an initially colored state to a discolored state when the writing ink is exposed a pH increase, more specifically a pH increase to a value of more than about 9.0, in particular of more than 9.5. The pH-change may be obtained by applying an aqueous ink eradicator composition. In some embodiments, it may be advantageous that said aqueous ink eradicator composition has a pH-value of more than about 9.0, more specifically of more than 9.5. In some embodiments, the aqueous ink eradicator composition may comprise a sulfite, a bisulfite, an amine or mixtures thereof.

As indicated above, the gelling agent may comprise water-insoluble cellulose nanofibers. When referring to a water-insoluble cellulose nanofiber it should be understood that that cellulose nanofibers may still comprise bundles of individual cellulose fibrils which are bound to each other under formation of highly crystalline structures in which the individual cellulose macromolecules have formed extensive intra-and intermolecular hydrogen bonds. The actual dissolution of cellulose nanofibers requires disruption of these intra- and intermolecular hydrogen bonds affording solubilized cellulose nanofibers. In the water-insoluble cellulose nanofiber of the present disclosure, the crystallinity within the cellulose nanofiber is so extensive that dissolution into individual cellulose fibrils or macromolecules is not taking place (or at least not to a substantial degree) when adding the cellulose nanofibers to distilled water (i.e. without adding external acids or bases) at room temperature (e.g. at about 20 °C). In other words, the property of the cellulose nanofiber being water-insoluble may be seen as a measure of the size of and/or the crystallinity within the cellulose nanofibers.

In some embodiments, the water-insoluble cellulose nanofibers may comprise fibers having a diameter of less than about 1000 nm, more specifically less than about 800 nm, and in particular less than about 500 nm. The method of determining the diameter of the cellulose nanofibers is not particularly limited and includes measuring the two-dimensional representation of the diameter of the fiber in a scanning electron microscope (SEM) image. Alternatively or additionally, in some embodiments, the water-insoluble cellulose nanofibers may comprise fibers having a diameter of more than about 10 nm, more specifically more than about 20 nm, and in particular more than about 30 nm. Alternatively or additionally, in some embodiments, the water-insoluble cellulose nanofibers may comprise fibers having an aspect ratio of at least about 5, more specifically at least about 8, and in particular at least about 10. The determination of the aspect ratio is again not particularly limited and includes measuring the measuring the two-dimensional representation of the diameter and length of the fiber in a scanning electron microscope (SEM) image. In some embodiments, the water-insoluble cellulose nanofibers may comprise fibers having a length of at least about 3 µm, more specifically at least about 5 µm, and in particular at least about 8 µm. The determination of the length is not particularly limited and includes measuring the measuring the length on a two-dimensional representation of the fiber in a scanning electron microscope (SEM) image. In some embodiments, the water-insoluble cellulose nanofibers, such as ASL CNF 901 by Fuji Pigment Co. Ltd, may comprise fibers which form a network, in particular a three-dimensional network of entangled fibers.

In some embodiments, the water-insoluble cellulose nanofibers do not comprise 2,2,6,6-tetramethylpiperidine-1-oxyl radical- (TEMPO)-mediated or otherwise oxidized cellulose.

When referring to the water-insoluble cellulose nanofibers not comprising 2,2,6,6-tetramethylpiperidine-1-oxyl radical- (TEMPO)-mediated or otherwise oxidized cellulose, is intended to mean any water-insoluble cellulose nanofibers which were not subjected to an oxidation treatment, such as a treatment which is oxidizing a part of the hydroxyl groups (-OH groups) of β-glucose constituting cellulose to aldehyde groups (-CHO groups) and/or a carboxyl groups (-COOH groups).

In some embodiments, the gelling agent does not comprise cellulose derivatives functionalized with an ether moiety, in particular methyl- and ethylcellulose and carboxymethylcellulose. The aforementioned cellulose derivatives are typically water-soluble, e.g. because the ether moieties prevent the proper crystallization of the cellulose macromolecules.

In some embodiments, the gelling agent, in particular in case that it comprises water-insoluble cellulose nanofibers, may be present in amounts of between about 0.02 and about 0.5 wt.-%, more specifically between about 0.05 and about 0.25 wt.-%, and in particular between about 0.08 and about 0.2 wt.-%, relative to the total weight of the ink.

In some embodiments, the water-insoluble cellulose nanofibers may be prepared from plant biomass.

In some embodiments, the water-insoluble cellulose nanofibers may be characterized in dispersion by an average particle diameter as measured by dynamic light scattering, in particular using the MALVERN Zetasizer nano ZS apparatus, of lower than about 3 µm, in particular lower than about 2 µm. Without wishing to be bound by theory, inks comprising such water-insoluble nanocellulose nanofibers can be advantageously used in pen, in particular a ball pen, even when the pen exhibits a small gap between the ball and the tip, such as gaps of about 2 µm, since such sizes allows to prevent the formation of an ink flow-blocking mass at the entrance of the nib, therefore to avoid line breakage and/or clogging of the tip.

In some embodiments, the water-insoluble cellulose nanofibers may be incorporated into the ink as a dispersion comprising about 0.05 - about 10% by weight water-insoluble cellulose nanofibers in an organic solvent, in particular from about 0.5 to about 2% by weight, based on the total weight of the dispersion.

An indicated above, the gelling agent may also comprise a mixture of silica particles and of at least one fatty acid amide wax. The term "mixture" is not particularly limited and is intended to refer to any combination comprising silica particles and at least one fatty acid amide wax in the final ink. It is not necessary to add the components as mixture during ink formulation. However, in some embodiments, it may be advantageous to premix the silica particles and the at least one fatty acid amide wax. Suitable processes for doing this will be elaborated in the following:
In one step, a first premix comprising silica particles in a solvent is formed. The temperature in this step may be between about 30 and about 70°C. The first premix may be mixed with a shear rate of between about 20 and about 25 m/s. In another step, a second premix comprising fatty acid amide wax in a solvent is formed. The temperature in this step may be between about 30 and about 70°C. It should be understood that the steps of forming the first premix can be performed with only a part of the solvent contained in the final writing ink. Then, the first premix may be combined with the remainder of the components of the writing ink.

However, in some cases, it may be advantageous that the fatty acid amide wax is activated by formation of a premix in a solvent (second premix), advantageously the solvent as described above for the ink, in particular a glycol ether, before its addition in the writing ink containing the (remainder of the) solvent and the coloring agent, the silica particles and optionally additives. Without wishing to be bound by theory, it is believed that such activation may allow the spreading of the fatty acid amide wax and therefore the obtaining of a stronger gel network. Advantageously the activation step (formation of a premix) may be carried out at a precise temperature and shear stress.

Accordingly, in some cases, the non-aqueous writing ink may be prepared by the following steps: In one step, a first premix comprising silica particles in a solvent is formed. The temperature in this step may be between about 30 and about 70°C. The first premix may be mixed with a shear rate of between about 20 and about 25 m/s. In another step, a second premix comprising fatty acid amide wax in a solvent is formed. The temperature in this step may be between about 30 and about 70°C. The second premix may be mixed with a shear rate of between about 20 and about 25 m/s. It should be understood that the steps of forming the first and second premixes can be performed with only a part of the solvent contained in the final writing ink. Then, the first and second premixes may be combined with the remainder of the components of the writing ink.

In order to obtain a premix, a rotor-stator disperser can be used. The activation of the fatty acid amide wax may be observed by measuring viscosity at rest of the premix. When activation is complete, viscosity at rest is maximal (spreading the fatty acid amide wax increases the viscosity at rest).

In some embodiments, the silica particles may comprise hydrophilic or hydrophobic silica particles. It may be advantageous that the silica particles are hydrophilic silica particles. It may be advantageous that the silica particles are fumed silica particles, such as the products sold by Evonik under the trade names AEROSIL^{®} 200 and AEROSIL^{®} R812.

In some embodiments, the silica particles may comprise dispersed silica particles (or silica-based gel-like particles) wherein the average particle size is less than about 1 µm, specifically less than about 0.9 µm, in particular less than about 0.8 µm using dynamic light scattering (DLS) such as Malvern Zetasizer ZS.

Fatty acid amide waxes of the present disclosure are, as such, well-established in the art as *i.a.* rheology-modifying agents. Suitable fatty acid residues may include aliphatic carboxylic acids having more than about 6 carbon atoms, in particular about 6 to about 24 carbon atoms, or about 6 to about 18 carbon atoms. Said aliphatic carboxylic acids may optionally be substituted, in particular with hydroxyl groups. Examples of suitable fatty acid residues include residues derived from caprylic acid, capric acid, lauric acid, myristic acid, palmitic acid, stearic acid, hydroxystearic acid, arachidic acid, and behenic acid.

As said, in some embodiments, the fatty acid amide may comprise more than one type of fatty acid amide wax, for instance two, three, four or even more waxes.

In some embodiments, the fatty acid amide wax is a fatty acid diamide wax. The fatty acid diamide wax may comprise a fatty acid diamide comprising two fatty acid residues of about 6 or more carbon atoms, in particular of about 6 to about 24 carbon atoms, or about 6 to about 18 carbon atoms, which may optionally be substituted, in particular with hydroxyl groups. It may be advantageous that the fatty acid diamide wax comprises an N,N'-alkylene moiety having between 1 and about 12 carbon atoms, in particular between 1 and about 6 carbon atoms, in particular between about 2 to about 4 carbon atoms. It may be particularly advantageous that the fatty acid diamide wax comprises an N,N'-ethylene-bis-fatty acid amide, in particular wherein the two fatty acid residues independently of each other comprise about 6 or more carbon atoms, in particular about 6 to about 24 carbon atoms, or about 6 to about 18 carbon atoms. Each of the fatty acid residues may further and independently from each other be substituted, in particular with hydroxyl groups.

In some embodiments, it may be advantageous that the fatty acid amide wax may comprise 12-hydroxy-N-[2-[(1-oxooctyl)amino]ethyl]octadecanamide; N,N'-1,2-ethylene bis(12-hydroxy-octadecanamide); N,N'-1,2-ethylene bis(12-hydroxyoctadecanamide); N,N'-ethylene bis(12-hydroxystearamide); N,N'-ethylene bis(caprylamide), or mixtures thereof.

In some embodiments, it may be advantageous that the fatty acid amide wax may comprise an octadecanamide of the following formula (I)

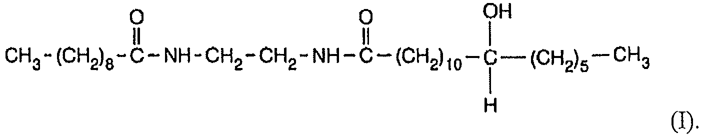

In particular the fatty acid amide wax may the product sold by Arkema under the name Crayvallac super.

Examples of fatty acid amide waxes are Crayvallac Super sold by Arkema, Disparlon 6500 sold by King Industries Inc., Luvotix SAB sold by Lehvoss Group.

In some embodiments, the gelling agent, in particular if the gelling agent comprises a mixture of silica particles and of a fatty acid amide wax, may be present in amounts of between about 0.1 and about 2 wt.-%, more specifically of between about 0.15 and about 1.2 wt.-%, more specifically between about 0.30 and about 0.60 wt.-%, relative to the total weight of the ink.

In some embodiments, the silica particles may be present in an amount of between about 0.10 and about 0.60 wt.-%, relative to the total weight of the ink, more specifically wherein the silica particles are chosen from hydrophilic silica particles.

In some embodiments, the fatty acid amide wax may be present in an amount of between about 0.10 and about 0.60 wt.-%, relative to the total weight of the ink.

In some embodiments, the gelling agent may also comprise both water-insoluble cellulose nanofibers and a mixture of silica particles and of a fatty acid amide wax.

It should be understood that the presence of further gelling agents is not excluded and that one or more further gelling agents can be optionally added to the ink.

Next, the dye components will be discussed in more detail:
As indicated above, the non-aqueous writing ink of the present disclosure may comprise a pH-sensitive water-soluble dye as well as optional other dyes.

In some embodiments, the pH-sensitive water-soluble dye may have a solubility in 1-phenoxy-ethanol at about 25 °C of less than 1 g/L. Determining the solubility is not particularly limited and can be done by e.g. using the USP paddle method stirring at 50 rpm until the thermodynamic equilibrium is reached. In some embodiments, the pH-sensitive water-soluble dye may have a solubility in 1-phenoxy-2-propanol at about 25 °C of less than 1 g/L. In some embodiments, the pH-sensitive water-soluble dye may have a solubility in both 2-phenoxy-ethanol and 1-phenoxy-2-propanol of less than 1 g/L at about 25 °C.

In some embodiments, the pH-sensitive water-soluble dye may be capable of changing from an initially colored state to a discolored state in response to a pH-change, more specifically in response to a pH increase, more specifically in response to a pH increase to a value of more than 9.0, more specifically more than 9.5.

In most embodiments, it will be advantageous that the color-change pH at which the pH-sensitive dye changes from an initially colored state to a discolored state is greater than the pH of the ink composition.

In some embodiments, the pH-sensitive water-soluble dye may be selected from the group consisting of triarylmethane dyes, methine dyes and azomethine dyes and mixtures thereof. In In some embodiments, it will be advantageous that the pH-sensitive water-soluble dye is a triarylmethane dye. The aforementioned dye classes are well-known in the art. For instance, a triarylmethane dye means a dye that includes three aryl groups covalently bonded to a methyl group. One or more of the aryl groups may be substituted with a ionic or ionizable group such as a sulfonate group to impart water-solubility. One or more of the aryl groups may also be substituted with one or more chromophores to adjust the color.

In some embodiments, the pH-sensitive water-soluble dye may be selected from the group consisting of Acid Blue 90, Acid Blue 93, Acid Violet 17, Acid Violet 19, Basic Red 13, Basic Red 14, Basic Red 15, Acid Green 3 and Basic Yellow 49.

In some embodiments, the non-aqueous writing ink may comprise between about 0.5 and about 12 wt.-% of the pH-sensitive water-soluble dye, specifically between about 1 and about 10 wt.-% of the pH-sensitive water-soluble dye, and more specifically about 2 and about 8 wt.-% of the pH-sensitive water-soluble dye, relative to the total weight of the writing ink.

In some embodiments, the non-aqueous writing ink may further comprise a water-insoluble second dye which does not change from an initially colored state to a discolored state when the writing ink is exposed to a pH-change, more specifically in response to a pH increase, more specifically in response to a pH increase to a value of more than 9, more specifically of more than 9.5.

As the ink eradicator is generally aqueous, it is advantageous to use a water-insoluble dye as second dye. Indeed, this avoids having a smearing effect when applying the aqueous ink eradicator composition on the written mark to discolor the pH-sensitive water-soluble dye.

Representative dyes are well-established in the art and include azoic dyes, triarylmethane dyes, phthalocyanine derivative dyes, xanthene dyes, organic, inorganic and processed pigments, and mixtures thereof. In some embodiments, the non-aqueous writing ink may comprise between about 0.5 and about 12 wt.-% of the second dye, specifically between about 1 and about 10 wt.-% of the second dye, and more specifically about 2 and about 8 wt.-% of the second dye, relative to the total weight of the writing ink.

Next, optional further components are discussed. The below is not a comprehensive discussion of optional components, i.e. further components not discussed below may optionally be added.

In some embodiments, the non-aqueous writing ink comprises a homo or copolymer of vinylpyrrolidone and/or a polyvinyl alcohol which is acetalized with an aldehyde comprising between 1 and about 6 carbon atoms. In particular, the addition of such component further reduces the risk of static leakage of the composition, thereby further improving the high laydown that can be achieved thanks to the composition and therefore the vividness of the written mark. Besides, its presence may also improve the cleanliness of the writing.

In some embodiments, the non-aqueous writing ink may comprise a homo or copolymer of vinylpyrrolidone, in particular a polyvinylpyrrolidone, in amounts of between about 0.05 and about 0.6 wt.-%, in particular between about 0.05 and about 0.2 wt.-%, relative to the total weight of the ink.

In some embodiments, the non-aqueous writing ink may comprise a homo or copolymer of vinylpyrrolidone. In some embodiments, the homo or copolymer of vinylpyrrolidone may advantageously comprise a polyvinylpyrrolidone. In some embodiments, it may be advantageous that the homo or copolymer of vinylpyrrolidone is present in amounts of between about 0.05 and about 0.8 wt.-%, more specifically between about 0.1 and about 0.6 wt.-%, and in particular between about 0.15 and about 0.5 wt.-%, relative to the total weight of the ink.

In some embodiments, the homo or copolymer of vinylpyrrolidone may have a weight-average molecular weight of above about 200 kDa, specifically between about 400 and about 2300 kDa, more specifically between about 450 and about 2000 kDa, and in particular between about 600 and about 1900 kDa.

In some embodiments, the non-aqueous writing ink may comprise a polyvinyl alcohol which is acetalized with an aldehyde comprising between 1 and about 6 carbon atoms.

The polyvinyl alcohol which is acetalized with an aldehyde comprising between 1 and about 6 carbon atoms may be present in amounts of between about 0.05 and about 1.0 wt.-%, more specifically between about 0.08 and about 0.8 wt.-%, even more specifically between about 0.1 wt.-% and about 0.6 wt.-%, and in particular between about 0.10 wt.-% and about 0.45 wt.-%, relative to the total weight of the ink. In some embodiments, it may be advantageous that the polyvinyl alcohol which is acetalized with an aldehyde comprising between 1 and about 6 carbon atoms is a polyvinylbutyral. In some embodiments, the polyvinyl alcohol which is acetalized with an aldehyde comprising between 1 and about 6 carbon atoms, in particular the polyvinylbutyral, may have a weight-average molecular weight of above about 200 kDa, specifically between about 400 and about 2300 kDa, more specifically between about 450 and about 2000 kDa, and in particular between about 600 and about 1900 kDa.

In some embodiments, it may be advantageous that the polyvinyl alcohol which is acetalized with an aldehyde comprising between 1 and about 6 carbon atoms, in particular polyvinylbutyral, is used in combination with a homo or copolymer of vinylpyrrolidone, in particular a polyvinylpyrrolidone. In such an embodiment these two polymers may be jointly present in amounts of between about 0.05 and about 1.0 wt.-%, more specifically between about 0.08 and about 0.8 wt.-%, even more specifically between about 0.1 wt.-% and about 0.6 wt.-%, and in particular between about 0.10 wt.-% and about 0.45 wt.-%, relative to the total weight of the ink. It may be advantages in such embodiments that the homo or copolymer of vinylpyrrolidone, in particular the polyvinylpyrrolidone, has a has a weight-average molecular weight of above about 200 kDa, specifically between about 400 and about 2300 kDa, more specifically between about 450 and about 2000 kDa, and in particular between about 600 and about 1900 kDa.

In some embodiments, the non-aqueous writing ink may further comprise a viscosity-imparting agent, more specifically a resin selected from polyester resins, polyurethane resins, ketone resins, ketone-formaldehyde resins, ether resins, vinyl resins, polyvinyl alcohols, acrylic resins, styrene-acrylic resins, styrene-maleic acid copolymer resins, rosin-maleic acid copolymer resins, phenol resins, cellulosic resins, amid resins, alkyd resins, rosin modified resins, rosin modified phenol resins, xylene resins, polyacetal resins, terpene resins, phenoxy resins or a mixture thereof; which are optionally present in an amount of between about 3 and about 35%, specifically between about 5 and about 30%, and in particular between about 5 to about 20%, relative to the total weight of the ink.

In some embodiments, the non-aqueous writing ink may further comprise one or more further additives. In some embodiments, the additives may be selected from the group consisting of thickening agents, clear drain agents, viscosity imparting agents, lubricants, dispersing agents and mixtures thereof.

In some embodiments, the non-aqueous writing ink may comprise a second solvent which is different from 1,2-propanediol, diethylene glycol, monoethylene glycol and dimethylsulfoxide and which is not water. The amount of the second solvent is not particularly limited as long as it does not interfere with 1,2-propanediol, diethylene glycol, monoethylene glycol and dimethylsulfoxide in the solubilization of the water-soluble pH-sensitive dye.

In some embodiments, said second solvents may be used in amounts which are lower relative (by weight) to the (combined) amounts of 1,2-propanediol, diethylene glycol, monoethylene glycol and dimethylsulfoxide. In some embodiments, the relative weight ratio between the solvent selected amongst 1,2-propanediol, diethylene glycol, monoethylene glycol and dimethylsulfoxide and mixtures thereof and the second solvent may be above about 1, more specifically above about 2, even more specifically above about 2.5; and in particular in a range of from about 1 to about 5, more specifically from about 2 to about 4.

In some embodiments, the non-aqueous writing ink comprises said second solvent in amounts of less than about 35 wt.-%, more specifically less than about 30 wt.-% and in particular less than about 25 wt.-%, relative to the total weight of the writing ink. In some embodiments, the non-aqueous writing ink comprises said second solvent in amounts of between about 5% to about 35 wt.-%, more specifically of between about 10% to about 30 wt.-% and in particular of between about 10% to about 25 wt.-%, relative to the total weight of the writing ink. The second solvent may also be a mixture of several second solvents.

As said, the nature of the second solvent is not particularly limited and also includes *i.a.* a liquid medium which - on its own - merely disperses or suspends the water-soluble pH-sensitive dye. In some embodiments, the second solvent may be selected from the group consisting of glycol ethers, alcohols, and mixture thereof. It may be advantageous that the second solvent is selected from polyethylene glycol ethers, polypropylene glycol ethers, phenoxyethanol, such as 2-phenoxyethanol, phenoxypropanol such as 1-phenoxy-2-propanol, or mixtures thereof. In some embodiments, the second solvent may be an alcohol having a high boiling point such as boiling point of above about 130°C, above about 150°C, or above about 200°C. In some embodiments, the second solvent may be an alcohol selected form the group consisting of phenoxyethanol, such as 2-phenoxyethanol, phenoxypropanol such as 1-phenoxy-2-propanol, benzyl alcohol, dipropylene glycol, trimethylene glycol, glycerin, and mixtures thereof. In some embodiments, the second solvent may be selected from the group consisting of phenoxyethanol, such as 2-phenoxyethanol and/or phenoxypropanol such as 1-phenoxy-2-propanol.

In some embodiments, the non-aqueous writing ink may comprise more than about 50 wt.-%, more specifically more than about 55 wt.-% and in particular more than about 60 wt.-% of total content of solvent (i.e. the solvent chosen from 1,2-propanediol, diethylene glycol, monoethylene glycol and dimethylsufoxide and/or mixtures thereof (which can be named as "first solvent") and the optional second solvent.

In some embodiments, the non-aqueous writing ink may have a viscosity at rest at about 20 °C of between about 20 000 cps and about 150 000 cps, more specifically between about 20 000 cps and about 120 000 cps, and in particular between about 25 000 cps and about 100 000 cps. The viscosity at rest may be measured at about 20°C with a cone-and-plate rheometer such as a rheometer by Malvern Kinexus with a cone of about 40 mm and an angle of about 4° with a shear rate of 0.01 s⁻¹.

In some embodiments, the non-aqueous writing ink may have a viscosity under shear at about 100 s⁻¹ at about 20 °C of between about between about 1200 cps and about 10 000 cps, more specifically between about 1300 cps and about 5 000 cps, and in particular between about 1500 cps and about 4000 cps. The viscosity under shear may be measured at about 20°C with a cone-and-plate rheometer such as a rheometer by Malvern Kinexus with a cone of about 40 mm and an angle of about 4° with a shear rate of 100 s⁻¹.

In some embodiments, the non-aqueous writing ink may have a loss factor tan δ at rest of between about 3 and about 15, more specifically between about 4 and about 12, and in particular between about 5 and about 12. The loss factor tan δ at rest may be measured at about 20°C with a cone-and-plate rheometer such as a rheometer by Malvern Kinexus with a cone of about 40 mm and an angle of about 4° with an oscillation measurement (frequency = about 1 Hz, shear about 20 Pa).

In some embodiments, the non-aqueous writing ink may have a loss factor tan after shear of between about 8 and about 60, more specifically between about 11 and about 50, and in particular between about 15 and about 40. The loss factor tan δ after shear may be measured at about 20°C with a cone-and-plate rheometer such as a rheometer by Malvern Kinexus with a cone of about 40 mm and an angle of about 4° with an oscillation measurement (frequency = about 1 Hz, shear about 20 Pa) after pre-shearing the sample (to simulate the writing process) for about 30 seconds at about 1000 s⁻¹.

In a second aspect, the present disclosure relates to a writing instrument. The type of writing instrument is not particularly limited but, in particular, includes a ball point pen. The writing instrument may comprise the non-aqueous writing ink as defined for any of the embodiments of the first aspect of the present disclosure. The writing instrument may be configured to dispense more than about 50 mg, more specifically between about 50 and about 100 mg, and in particular between about 55 mg and about 70 mg, of the non-aqueous writing ink per 150 meter of writing. The determination of the laydown is not particularly limited and can be done as indicated in the below experimental section. In some embodiments, the writing instrument may comprise a ball point having a ball size of between about 0.6 mm and about 1.5 mm, in particular between about 0.7 mm and about 1.2 mm.

In a third aspect, the present disclosure relates a process of preparing a non-aqueous writing ink according to the first aspect of the present disclosure or a writing instrument according to the second aspect of the present disclosure. The non-aqueous writing ink may be prepared by a process comprising the following steps: a) providing a first homogeneous premix comprising the gelling agent and at least a part of the solvent; and b) combining the first premix with the remainder of the components of the non-aqueous writing ink.

In some embodiments, the non-aqueous writing ink may be prepared by a process comprising the following steps: a) providing a first homogeneous premix comprising the water-insoluble cellulose nanofibers and at least a part of the solvent; and b) combining the first premix with the remainder of the components of the non-aqueous writing ink.

In some embodiments, the non-aqueous writing ink may be prepared by the following steps: a) Forming a first premix comprising silica particles in a solvent. The temperature in this step may be between about 30 and about 70°C. The first premix may be mixed with a shear rate of between about 20 and about 25 m/s. b) Forming a second premix comprising fatty acid amide wax in a solvent. The temperature in this step may be between about 30 and about 70°C. The second premix may be mixed with a shear rate of between about 20 and about 25 m/s. c) Combining the first and second premixes with the remainder of the components of the non-aqueous writing ink.

In the following the present disclosure will be further elaborated by way of Examples.

### Measuring Methods

Measurements on inks and pens were carried out as follows:
1. Measurement of rest viscosity
   The viscosity of the ink has been measured at 20°C with a cone-and-plate rheometer Malvern Kinexus with a cone of 40 mm and an angle of 4° with a shear rate of 0.01 s⁻¹.
2. Measurement of shear viscosity
   The viscosity of the ink has been measured at 20°C with a cone-and-plate rheometer Malvern Kinexus with a cone of 40 mm and an angle of 4° with with a shear rate of 100 s⁻¹.
3. Determination of shear thinning index
   Mathematical formula : Shear thinning index = (Measurement of rest viscosity 0.01s⁻¹ at 20° CP 4°/40 mm) / (Measurement of rest viscosity 100 s⁻¹ at 20° CP 4°/40 mm)
4. Measurement of tan delta at rest
   The measurement was performed with a cone-and-plate rheometer Malvern Kinexus with a cone of 40 mm and an angle of 4° and with an oscillation measurement (Frequency = 1 Hz, Shear 20 Pa).
5. Measurement of tan delta after shear at 1000s⁻¹
   The measurement was performed with a cone-and-plate rheometer Malvern Kinexus with a cone of 40 mm and an angle of 4° after pre-shearing the sample (to simulate the writing process) for about 30 seconds at about 1000 s⁻¹.
6. Seepage 23°C - 24h storage
   This test measures the amount of ink that will leak from the point of a ball pen when it is stored pointing downwards for one day at 23°C (ink leakage). The process was as carried out as follows (test on 10 pens):
   1. Ball pen start = make pen write to decrease its viscosity.
   2. Wipe ink from the point with non fluffy paper
   3. Store the Ball pen 24 hours point down at 23°C / 50% RH
   4. Transfer ink drop from the pen point to a paper. Rotate the point of each pen on the test sheet 360°, transferring any ink seepage to the test sheet.
   5. Cover the seepage display with a strip of transparent tape
   6. Spread the ink stain using a ceramic roulette to a circular stain.
   7. Measurement of diameter of each stain (record the minimum diameter that incorporates the entire sport)
   8. Calculate the average spot size (mm) from all 10 samples.
   A value of seepage after 24h storage of below 2 mm is considered as satisfying.
7. Seepage after 1 week storage at 40°C / 80 % RH (relative humidity)
   This test measures the amount of ink that will leak from the point of a ball pen when it is stored point down one week at 40°C / 80% RH (ink leakage). The test simulates keeping the pen in pocket of shirt close to human body. The process was as carried out as follows (test on 10 pens):
   1. Ball pen start = make pen write to decrease its viscosity.
   2. Wipe ink from the point with non fluffy paper
   3. Store the Ball pen 7 days point down @ 40°C / 80% RH
   4. Transfer ink drop from the pen point to a paper. Rotate the point of each pen on the test sheet 360°, transferring any ink seepage to the test sheet.
   5. Cover the seepage display with a strip of transparent tape
   6. Spread the ink stain using a ceramic roulette to a circular stain.
   7. Measurement of diameter of each stain (record the minimum diameter that incorporates the entire sport)
   8. Calculate the average spot size (mm) from all 10 samples.
   A value of seepage after 1 week storage at 40°C / 80 % RH (relative humidity) of below 2 mm is considered as satisfying.
8. Machine writing cleanliness
   This test evaluates the machine write quality of pens under given test conditions during the first 20 meters of machine writing.

### Equipment:

1. Air conditioned and humidity controlled room: 23 °C (±2°) 50% RH (±5%)
2. Writing machine operated according to the following guidelines:
   a) General conditions:
      70° writing angle (0, +10)
      100 mm circle circumference
      Total weight pen / holder / additional weight : 140-160 grams
      ISO 12757 test paper
      Writing surface of polished stainless steel with felt underneath
   b) Machine Parameters:
      4.5 m/min writing speed (± 0.5)
      0.6 mm spacing between circles (± 0.2) on Minitek APC or position 5 on Mikron
      1 axial pen rotation per 100 circles
      Writing length : 20 meters
   c) Process:
      1. Place cartridges in barrels
      2. Draw loops to start pens
      3. Select the position with spacing 0.6 mm and record 20 meters over the counter
      4. Run the test by pressing the "pens rotation"
      5. Calculate average score on tested pens excluding pens which have not started.
      6. Evaluate the cleanliness i.e. more or less uniform thickness on the line (presence of stains)

### 9. Machine writing regularity

This test evaluates the machine write quality of pens under given test conditions during the first 20 meters of machine writing.

### Equipment :

1. Air conditioned and humidity controlled room: 23 °C (±2°) 50% RH (±5%)
2. Writing machine operated according to the following guidelines:
   a) General conditions:
      70° writing angle (0, +10)
      100 mm circle circumference
      Total weight pen / holder / additional weight : 140-160 grams
      ISO 12757 test paper
      Writing surface of polished stainless steel with felt underneath
   b) Machine Parameters:
      4.5 m/min writing speed (± 0.5)
      0.6 mm spacing between circles (± 0.2) on Minitek APC or position 5 on Mikron
      1 axial pen rotation per 100 circles
      Writing length : 20 meters
   c) Process:
      1. Place cartridges in barrels
      2. Draw loops to start pens
      3. Select the position with spacing 0.6 mm and record 20 meters over the counter
      4. Run the test by pressing the "pens rotation"
      5. Calculate average score on tested pens excluding pens which have not started.
      6. Evaluate the regularity i.e. more or less uniform color when writing (presence of white in lines)

### 10. Complete ink: restitution

This test reflects the "mileage" of a pen, i.e. the capacity of the pen to write until it stops writing.

Samples are marked "Yes" when the pen wrote until its cartridge was completely empty. Otherwise, the sample was marked as "No".

### 11. Handwriting cleanliness

This test measures the uniformity in thickness of a written line. The regularity of the written line thickness was visually assessed and rated in intervals of 1. The rating scale was as follows:
10: very clean, no excess, no stains,
0: not clean, excess and ink stains on the written lines

### 12. Handwriting regularity

This test measures the uniformity of color when writing. The samples were visually inspected for lighter or darker areas and "channels" in the middle of a line. The rating scale was as follows, with intervals of 1:
10: very regular, no white in the line,
0: not regular

### 13. Gooping

This test assesses whether ink drops from the point after manual writing. It is a visual assessment of the point after writing one sentence.

### 14. pH

The pH was measured at room temperature (20°C) as follows:
- Mix 18g ink with 50 g of benzyl alcohol.
- Add 24g of propylene glycol and 8g of water.
- Measure the pH with a pH-meter with an electrode, such as Inlab Science Pro from Mettler Toledo.

### 15. Laydown

The laydown was measured as follows: Measure the quantity of ink deposited at room temperature and 50% RH when realizing a 150 meter length writing line on a paper ISO12757, with a scriptometer such as Minitec, Hutt or Mikron apparatus, with a writing angle 70% and at a speed of writing of 4.5 m/min. The total weight of the writing instrument assembly (writing instrument + support + adjusting weights) between about 140 to about 160g.

### Example 1

The solubility of Acid Blue 93, a water-soluble pH-sensitive triarylmethane dye, was determined by stirring 5 wt.-% of the dye in 95 wt.-% of the solvent. The following results reported in below Table 1 were obtained:

**Table 1: Solubility of Acid Blue 93 in several solvents**

| | Solvent | Solvent (% by weight) | Dye | Dye (% by weight) | Solubility |
|---|---|---|---|---|---|
| Examples | 1,2-propanediol | 95 | Acid Blue 93 | 5 | Soluble |
| | dimethylsulfoxide | 95 | Acid Blue 93 | 5 | Soluble |
| | diethyleneglycol | 95 | Acid Blue 93 | 5 | Soluble |
| | monoethyleneglycol | 95 | Acid Blue 93 | 5 | Soluble |
| Comparative examples | Carbitol (CAS 111-90-0) | 95 | Acid Blue 93 | 5 | Insoluble |
| | dipropylene glycol | 95 | Acid Blue 93 | 5 | Insoluble |
| | 1-phenoxy-ethanol | 95 | Acid Blue 93 | 5 | Insoluble |
| | 1-phenoxy-2-propanol | 95 | Acid Blue 93 | 5 | Insoluble |
| | benzylic alcohol | 95 | Acid Blue 93 | 5 | Insoluble |
| | cyrene | 95 | Acid Blue 93 | 5 | Insoluble |

As can be seen from the above table 1, Acid Blue 93, a water-soluble pH-sensitive triarylmethane dye, was found to be soluble in a select number of solvents. This is surprising since these water-soluble dyes are commonly known to be insoluble in organic solvents, as also seen in the above comparative solvents. In these comparative solvents, it can be observed that the solvent is not colored and that the dye remains in the form of particles and precipitates at the bottom of the recipient.

Accordingly, it is possible to solubilize water-soluble pH-sensitive dyes in sufficient quantity in 1,2-propanediol, diethylene glycol, monoethylene glycol and dimethylsufoxide and mixtures thereof to provide an intensely colored ink and a vivid writing of the dried ink.

### Examples 2 and 3: Color Change Ink

Following the procedure outlined for the third aspect of the disclosure, the following non-aqueous writing inks were prepared:
Premixes were prepared/used as follows:
Premix of Example 2: Cellulose nanofibers (ASL CNF 901 Fibers^{®}) are delivered by the supplier Fuji as a premix at 1 - 1.5% CNF in phenoxyethanol (= FUJI ASL CNF 901).
Premix of Example 3: The fatty acid amide wax Crayvallac Super is prepared in premix form by passing 4 wt.-% Crayvallac Super in phenoxypropanol 20 times at 60°C through a rotor/stator disperser at 23 m/s.

The silica Aerosil 200 is prepared in premix form by passing 10 wt.-% Aerosil 200 in phenoxypropanol, for 12 times at 60°C through a rotor/stator disperser at 23 m/s.

The inks of Examples 2 and 3 were prepared by the following process:
First, the solvents were loaded in a vessel, followed by addition of the resins, additives and the dyes. Then the silica premix was added, followed by the addition of PVP. Next, either the fatty acid amide wax premix (Example 3) or the cellulose nanofiber premix (Example 2) is added, followed by filtering and degassing.

**Table 2: Ink composition (example 2) of a blue ink being discolorable (color-changing composition from blue to pink) to pink**

| Component | Primary Function | Example 2 (Content in wt. %) |
|---|---|---|
| Monoethylene glycol | Solvent | 45 |
| 1-phenoxy-2-propanol | Second solvent | 3.85 |
| Acid Blue 93 | Water-soluble pH-sensitive dye | 5 |
| Solvent Red 49 | Regular dye | 0.65 |
| Zelec A081 | Additive | 0.1 |
| Noramox 02 | Additive | 0.2 |
| SK resin (acetophenone-based, formaldehyde modified) | Binder (Newtonian) | 29 |
| Aerosil 200 at 10% in 1-phenoxy-2-propanol | Silica in second solvent | 4 |
| PVP K80 (CAS: 9003-39-8) | Elastic agent | 0.2 |
| FUJI ASL CNF 901 at 1-1.5 % in 1 -phenoxy-2-propanol | Non-oxidized cellulose nanofibers (part of gelling system) | 12 |
| Total | | 100 |

The rheological properties of the above ink were as follows:
- Viscosity at rest = 22020 cP
- Viscosity under shear = 2226 cP
- Tan delta at rest = 9.1
- pH of the ink composition = 5.5
- Seepage 23°C - 24h storage < 2 mm.
- Seepage after 1 week storage at 40°C / 80 % RH < 2 nun.Good color-intensity of the written mark (vividness) (before and after applying the ink eradicator composition)
- Laydown : 59 mg/150 meters

The ink composition of Example 2 was introduced in high laydown writing instrument having a ball-point of 1 mm.

According to the methods of evaluation described above no ink leakage was observed.

A blue written mark has been realized with this ink composition on a porous support (Clairefontaine 90g/m²). It has been observed that the writing is clean (no gooping), regular and of a blue good color intensity.

When applying an aqueous ink eradicator composition (amine based) commercialized under the reference LF4201 by Dokumental (pH= 10) on the written mark the color of the written mark is successfully changed from blue to pink.

No smearing has been observed while applying the aqueous ink eradicator composition.

**Table 3: Ink composition (example 3) of a blue ink being discolorable (color-changing composition from blue to pink) to pink**

| Component | Primary Function | (Content in wt. %) |
|---|---|---|
| 1,2-propanediol | Solvent | 50 |
| 1-phenoxy-2-propanol | Second solvent | 8 |
| Acid Blue 93 | Water-soluble pH-sensitive dye | 5 |
| Solvent Red 49 | Regular dye | 0.65 |
| Zelec A081 | Additive | 0.1 |
| Noramox 02 | Additive | 0.2 |
| SK resin (acetophenone-based, formaldehyde modified) | Binder (Newtonian) | 27 |
| Aerosil 200 at 10% in 1-phenoxy-2-propanol | Silica in second solvent | 4 |
| PVP K80 (CAS: 9003-39-8) | Elastic agent | 0.05 |
| Crayvallac Super at 4% in 1-phenoxy-2-propanol | Fatty acid amide wax (part of gelling system) in second solvent | 7 |
| Total | | 100 |

The rheological properties of the above ink were as follows:
- Viscosity at rest = 75620 cP
- Viscosity under shear = 2560 cP
- Tan delta at rest = 7.5
- pH of the ink composition = 5.8
- Seepage 23°C - 24h storage = 0.1 mm
- Seepage after 1 week storage at 40°C / 80 % RH = 0.55 mm
- Good color-intensity of the written mark (vividness) (before and after applying the ink eradicator composition)
- Laydown : 61 mg/150 meters

The ink composition of Example 3 was introduced in high laydown writing instrument having a ball-point of 1 mm.

According to the methods of evaluation described before no ink leakage was observed.

A blue written mark was realized with this ink composition on a porous support (Clairefontaine 90g/m²). It has been observed that the writing is clean (no gooping), regular and of a blue good color intensity.

When applying an aqueous ink eradicator composition (amine based) commercialized under the reference LF4201 by Dokumental (pH= 10) on the written mark the color of the written mark is successfully changed from blue to pink.

No smearing has been observed while applying the aqueous ink eradicator composition.

No ink leakage has been observed with the ink compositions according to the disclosure also these have been introduced in a high laydown writing instrument having a ball-point of 1 mm.

### Example 4 and 5: Erasable inks

Following the procedure outlined for the third aspect of the disclosure, the following non-aqueous writing ink were prepared.

Premixes were prepared/used as follows:
Premix of Example 4: Cellulose nanofibers (ASL CNF 901 Fibers^{®}) are delivered by the supplier Fuji as a premix at 1 - 1.5% CNF in phenoxyethanol (= FUJI ASL CNF 901).
Premix of Example 5: The fatty acid amide wax Crayvallac Super is prepared in premix form by passing 4 wt.-% Crayvallac Super in phenoxypropanol 20 times at 60°C through a rotor/stator disperser at 23 m/s.

The silica Aerosil 200 is prepared in premix form by passing 10 wt.-% Aerosil 200 in phenoxypropanol, for 12 times at 60°C through a rotor/stator disperser at 23 m/s.

The inks of Examples 4 and 5 were prepared by the following process:
First, the solvents were loaded in a vessel, followed by addition of the resins, additives and the dyes. Then the silica premix was added, followed by the addition of PVP. Next, either the fatty acid amide wax premix (Example 5) or the cellulose nanofiber premix (Example 4) is added, followed by filtering and degassing.

### Example 4:

**Table 4: Ink composition (example 4) of a blue ink being discolorable (erasable)**

| Component | Primary Function | (Content in wt. %) |
|---|---|---|
| Monoethylene glycol | Solvent | 45 |
| 1 -phenoxy-2-propanol | Second solvent | 3.85 |
| Acid Blue 93 | Water-soluble pH-sensitive dye | 5 |
| Zelec A081 | Additive | 0.1 |
| Noramox 02 | Additive | 0.2 |
| SK resin (acetophenone-based, formaldehyde modified) | Binder (Newtonian) | 29.65 |
| Aerosil 200 at 10% in 1-phenoxy-2-propanol | Silica in second solvent | 4 |
| PVP K80 (CAS: 9003-39-8) | Elastic agent | 0.2 |
| FUJI ASL CNF 901 at 1-1.5 % in 1-phenoxy-2-propanol | Non-oxidized cellulose nanofibers (part of gelling system) in second solvent | 12 |
| Total | | 100 |

The rheological properties of the above ink were as follows:
- Viscosity at rest = 22020 cP
- Viscosity under shear = 2226 cP
- Tan delta at rest = 9.1
- pH of the ink composition = 5.5
- Seepage 23°C - 24h storage < 2 mm.
- Seepage after 1 week storage at 40°C / 80 % RH < 2 mm. Good color-intensity of the written mark (vividness) (before applying the ink eradicator composition)
- Laydown : 59 mg/150 meters

The ink composition of Example 4 was introduced in high laydown writing instrument having a ball-point of 1 mm.

According to the methods of evaluation described above no ink leakage was observed.

A blue written mark has been realized with this ink composition on a porous support (Clairefontaine 90g/m²). It has been observed that the writing is clean (no gooping), regular and of a blue good color intensity.

When applying an aqueous ink eradicator composition (amine based) commercialized under the reference LF4201 by Dokumental (pH= 10) on the written mark the color of the written mark is successfully erased.

No ink leakage has been observed with the ink compositions according to the disclosure also these have been introduced in a high laydown writing instrument having a ball point of 1 mm.

### Example 5:

**Table 5: Ink composition (example 5) of a blue ink being discolorable (erasable)**

| Component | Primary Function | (Content in wt. %) |
|---|---|---|
| 1,2-propanediol | Solvent | 50 |
| 1 -phenoxy-2-propanol | Second solvent | 8 |
| Acid Blue 93 | Water-soluble pH-sensitive dye | 5 |
| Zelec A081 | Additive | 0.1 |
| Noramox 02 | Additive | 0.2 |
| SK resin (acetophenone-based, formaldehyde modified) | Binder (Newtonian) | 27.65 |
| Aerosil 200 at 10% in 1-phenoxy-2-propanol | Silica in second solvent | 2 |
| PVP K80 (CAS: 9003-39-8) | Elastic agent | 0.05 |
| Crayvallac Super at 4% in 1-phenoxy-2-propanol | Fatty acid amide wax (part of gelling system) in second solvent | 7 |
| Total | | 100 |

The rheological properties of the above ink were as follows:
- Viscosity at rest = 75620 cP
- Viscosity under shear = 2560 cP
- Tan delta at rest = 7.5
- pH of the ink composition = 5.8
- Seepage 23°C - 24h storage = 0.1 mm
- Seepage after 1 week storage at 40°C / 80 % RH = 0.55 mm
- Good color-intensity of the written mark (vividness) (before applying the ink eradicator composition)
- Laydown : 61 mg/150 meters

The ink composition of Example 5 was introduced in high laydown writing instrument having a ball point of 1 mm.

According to the methods of evaluation described before no ink leakage was observed.

A blue written mark was realized with this ink composition on a porous support (Clairefontaine 90g/m²). It has been observed that the writing is clean (no gooping), regular and of a blue good color intensity.

When applying an aqueous ink eradicator composition (amine based) commercialized under the reference LF4201 by Dokumental (pH= 10) on the written mark the color of the written mark is successfully erased.

No ink leakage has been observed with the ink compositions according to the disclosure also these have been introduced in a high laydown writing instrument having a ball point of 1 mm. To summarize, the inks performed well in writing tests and did provide clean and thin writing without gooping. The written mark made with these writing instruments exhibited a good color intensity and they could also be easily turned from blue to pink with standard eradicators, in particular with aqueous eradicators without any smearing effect. The non-aqueous ink compositions according to the present disclosure comprise specific solvents enabling to solubilize water-soluble dye. Combined with the specific gelling agents of the present disclosure, the compositions can be used in high laydown writing instruments while avoiding any static leakage phenomenon while providing a written mark of satisfying and vivid intensity and exhibiting a color-change and/or discoloration with classical water-soluble dyes.

## Claims

1. A non-aqueous writing ink comprising a solvent, a gelling agent and a pH-sensitive water-soluble dye;
wherein the solvent is selected from 1,2-propanediol, diethylene glycol, monoethylene glycol and dimethylsufoxide and/or mixtures thereof;
wherein the gelling agent comprises water-insoluble cellulose nanofibers and/or a mixture of silica particles and of at least one fatty acid amide wax; and
wherein the pH-sensitive water-soluble dye is capable of changing from an initially colored state to a discolored state when the writing ink is exposed to an ink eradicator composition or a pH-change, more specifically a pH increase, more specifically a pH increase to a value of more than about 9.0, in particular of more than 9.5.

2. The writing ink of claim 1, wherein the pH-sensitive water-soluble dye is having a solubility in distilled water at about 25 °C of more than about 50 g/L.

3. The writing ink of claim 1 or claim 2, wherein the pH-sensitive water-soluble dye is having a solubility in 2-phenoxyethanol at about 25 °C of less than 1 g/L.

4. The writing ink of any one of claims 1 to 3, wherein the ink eradicator composition is an aqueous ink eradicator composition, in particular an aqueous ink eradicator composition having a pH-value of more than about 9.0, more specifically of more than 9.5; or
wherein the pH-change is obtained by applying an aqueous ink eradicator composition, in particular an aqueous ink eradicator composition, in particular an aqueous ink eradicator composition having a pH-value of more than about 9.0, more specifically of more than 9.5.

5. The writing ink according to any one of claims 1 to 4, wherein the ink eradicator composition comprises a sulfite, a bisulfite, an amine or mixtures thereof.

6. The writing ink of any one of claims 1 to 5, wherein the pH-sensitive water-soluble dye is selected from the group consisting of triarylmethane dyes, methine dyes and azomethine dyes and mixtures thereof, more specifically Acid Blue 90, Acid Blue 93, Acid Violet 17, Acid Violet 19, Basic Red 13, Basic Red 14, Basic Red 15, Acid Green 3 and Basic Yellow 49.

7. The writing ink of any one of claims 1 to 6, wherein the non-aqueous writing ink comprises between about 0.5 and about 12 wt.-% of the pH-sensitive water-soluble dye, specifically between about 1 and about 10 wt.-% of the pH-sensitive water-soluble dye, and more specifically about 2 and about 8 wt.-% of the pH-sensitive water-soluble dye, relative to the total weight of the writing ink.

8. The writing ink of any one of claims 1 to 7, wherein the non-aqueous writing ink comprises less than about 5 wt.-% water, more specifically less than about 2 wt.-% water, and in particular less than about 0.5 wt.-% water; relative to the total weight of the writing ink.

9. The writing ink of any one of claims 1 to 8, wherein the solvent comprises 1,2-propanediol and/or monoethylene glycol.

10. The writing ink of any one of claims 1 to 9, wherein the non-aqueous writing ink comprises more than about 30 wt.-%, more specifically more than about 35 wt.-% and in particular more than about 40 wt.-% of the solvent, relative to the total weight of the writing ink.

11. The writing ink of any one of claims 1 to 10, wherein the non-aqueous writing ink comprises water-insoluble cellulose nanofibers in amounts of between about 0.02 and about 0.5 wt.-%, more specifically between about 0.05 and about 0.25 wt.-%, and in particular between about 0.08 and about 0.2 wt.-%, relative to the total weight of the ink.

12. The writing ink of any one of claims 1 to 11, wherein the non-aqueous writing ink comprises a homo or copolymer of vinylpyrrolidone and/or a polyvinyl alcohol which is acetalized with an aldehyde comprising between 1 and about 6 carbon atoms, more specifically a homo or copolymer of vinylpyrrolidone, in particular a polyvinylpyrrolidone, in amounts of between about 0.05 and about 0.6 wt.-%, in particular between about 0.05 and about 0.2 wt.-%, relative to the total weight of the ink.

13. The writing ink of any one of claims 1 to 12, wherein the non-aqueous writing ink further comprises a viscosity-imparting agent, more specifically a resin selected from polyester resins, polyurethane resins, ketone resins, ketone-formaldehyde resins, ether resins, vinyl resins, polyvinyl alcohols, acrylic resins, styrene-acrylic resins, styrene-maleic acid copolymer resins, rosin-maleic acid copolymer resins, phenol resins, cellulosic resins, amid resins, alkyd resins, rosin modified resins, rosin modified phenol resins, xylene resins, polyacetal resins, terpene resins, phenoxy resins or a mixture thereof; which are optionally present in an amount of between about 3 and about 35%, specifically between about 5 and about 30%, and in particular between about 5 to about 20%, relative to the total weight of the ink.

14. The writing ink of any one of claims 1 to 13, wherein the non-aqueous writing ink further comprises a second water-insoluble dye which does not change from an initially colored state to a discolored state when the writing ink is exposed to an aqueous ink eradicator composition or a pH-change, more specifically a pH increase, more specifically a pH increase to a value of more than about 9.0, in particular of more than 9.5.

15. A writing instrument comprising the non-aqueous writing ink of any one of claims 1 to 14, in particular a writing instrument which dispenses more than about 50 mg of the non-aqueous writing ink per 150 meter of writing.

## Patentansprüche

1. Nicht wässrige Schreibtinte, umfassend ein Lösungsmittel, ein Geliermittel und einen pH-Wert-empfindlichen wasserlöslichen Farbstoff;
wobei das Lösungsmittel ausgewählt ist aus 1,2-Propandiol, Diethylenglykol, Monoethylenglykol und Dimethylsufoxid und/oder Mischungen davon;
wobei das Geliermittel wasserunlösliche Cellulosenanofasern und/oder eine Mischung von Siliciumdioxidteilchen und mindestens einem Fettsäureamidwachs umfasst; und
wobei der pH-Wert-empfindliche wasserlösliche Farbstoff in der Lage ist, sich von einem anfänglich farbigen Zustand zu einem entfärbten Zustand zu ändern, wenn die Schreibtinte einer Tintenlöscherzusammensetzung oder einer pH-Wert-Änderung ausgesetzt ist, spezieller einer pH-Wert-Erhöhung, spezieller einer pH-Wert-Erhöhung auf einen Wert von mehr als etwa 9,0, insbesondere von mehr als 9,5.

2. Schreibtinte nach Anspruch 1, wobei der pH-Wert-empfindliche wasserlösliche Farbstoff eine Löslichkeit in destilliertem Wasser bei etwa 25 °C von mehr als etwa 50 g/L aufweist.

3. Schreibtinte nach Anspruch 1 oder 2, wobei der pH-Wert-empfindliche wasserlösliche Farbstoff eine Löslichkeit in 2-Phenoxyethanol bei etwa 25 °C von weniger als 1 g/L aufweist.

4. Schreibtinte nach einem der Ansprüche 1 bis 3, wobei die Tintenlöscherzusammensetzung eine wässrige Tintenlöscherzusammensetzung ist, insbesondere eine wässrige Tintenlöscherzusammensetzung, die einen pH-Wert von mehr als etwa 9,0 aufweist, spezieller von mehr als 9,5; oder
wobei die pH-Wert-Änderung durch ein Aufbringen einer wässrigen Tintenlöscherzusammensetzung, insbesondere einer wässrigen Tintenlöscherzusammensetzung, insbesondere einer wässrigen Tintenlöscherzusammensetzung, die einen pH-Wert von mehr als etwa 9,0 aufweist, spezieller von mehr als 9,5, erhalten wird.

5. Schreibtinte nach einem der Ansprüche 1 bis 4, wobei die Tintenlöscherzusammensetzung ein Sulfit, ein Bisulfit, ein Amin oder Mischungen davon umfasst.

6. Schreibtinte nach einem der Ansprüche 1 bis 5, wobei der pH-Wert-empfindliche wasserlösliche Farbstoff ausgewählt ist aus der Gruppe, bestehend aus Triarylmethanfarbstoffen, Methinfarbstoffen und Azomethinfarbstoffen und Mischungen davon, spezieller Acid Blue 90, Acid Blue 93, Acid Violet 17, Acid Violet 19, Basic Red 13, Basic Red 14, Basic Red 15, Acid Green 3 und Basic Yellow 49.

7. Schreibtinte nach einem der Ansprüche 1 bis 6, wobei die nicht wässrige Schreibtinte zwischen etwa 0,5 und etwa 12 Gew.-% den pH-Wert-empfindlichen wasserlöslichen Farbstoff umfasst, spezieller zwischen etwa 1 und etwa 10 Gew.-% den pH-Wert-empfindlichen wasserlöslichen Farbstoff und spezieller etwa 2 und etwa 8 Gew.-% den pH-Wert-empfindlichen wasserlöslichen Farbstoff, bezogen auf das Gesamtgewicht der Schreibtinte.

8. Schreibtinte nach einem der Ansprüche 1 bis 7, wobei die nicht wässrige Schreibtinte zu weniger als etwa 5 Gew.-% Wasser umfasst, spezieller zu weniger als etwa 2 Gew.-% Wasser und insbesondere zu weniger als etwa 0,5 Gew.-% Wasser; bezogen auf das Gesamtgewicht der Schreibtinte.

9. Schreibtinte nach einem der Ansprüche 1 bis 8, wobei das Lösungsmittel 1,2-Propandiol und/oder Monoethylenglycol umfasst.

10. Schreibtinte nach einem der Ansprüche 1 bis 9, wobei die nicht wässrige Schreibtinte zu mehr als etwa 30 Gew.-%, spezieller zu mehr als etwa 35 Gew.-% und insbesondere zu mehr als etwa 40 Gew.-% das Lösungsmittel umfasst, bezogen auf das Gesamtgewicht der Schreibtinte.

11. Schreibtinte nach einem der Ansprüche 1 bis 10, wobei die nicht wässrige Schreibtinte wasserunlösliche Cellulosenanofasern in Mengen zwischen etwa 0,02 und etwa 0,5 Gew.-%, spezieller zwischen etwa 0,05 und etwa 0,25 Gew.-% und insbesondere zwischen etwa 0,08 und etwa 0,2 Gew.-% umfasst, bezogen auf das Gesamtgewicht der Tinte.

12. Schreibtinte nach einem der Ansprüche 1 bis 11, wobei die nicht wässrige Schreibtinte ein Homo- oder Copolymer von Vinylpyrrolidon und/oder einen Polyvinylalkohol umfasst, der mit einem Aldehyd acetalisiert ist, umfassend zwischen 1 und etwa 6 Kohlenstoffatome, spezieller ein Homo- oder Copolymer von Vinylpyrrolidon, insbesondere ein Polyvinylpyrrolidon, in Mengen von zwischen etwa 0,05 und etwa 0,6 Gew.-%, insbesondere zwischen etwa 0,05 und etwa 0,2 Gew.-%, bezogen auf das Gesamtgewicht der Tinte.

13. Schreibtinte nach einem der Ansprüche 1 bis 12, wobei die nicht wässrige Schreibtinte ferner ein Viskosität verleihendes Mittel umfasst, spezieller ein Harz, das aus Polyesterharzen, Polyurethanharzen, Ketonharzen, Keton-Formaldehydharzen, Etherharzen, Vinylharzen, Polyvinylalkoholen, Acrylharzen, Styrol-Acrylharzen, Styrol-Maleinsäurecopolymerharzen, Kolophonium-Maleinsäurecopolymerharzen, Phenolharzen, Celluloseharzen, Amidharzen, Alkydharzen, Kolophonium-modifizierten Harzen, Kolophonium-modifizierten Phenolharzen, Xylolharzen, Polyacetalharzen, Terpenharzen, Phenoxyharzen oder einer Mischung davon ausgewählt ist; die optional in einer Menge zwischen etwa 3 und etwa 35 %, speziell zwischen etwa 5 und etwa 30 % und insbesondere zwischen etwa 5 bis etwa 20 % vorhanden sind, bezogen auf das Gesamtgewicht der Tinte.

14. Schreibtinte nach einem der Ansprüche 1 bis 13, wobei die nicht wässrige Schreibtinte ferner einen zweiten wasserunlöslichen Farbstoff umfasst, der sich nicht von einem anfänglich farbigen Zustand in einen entfärbten Zustand ändert, wenn die Schreibtinte einer wässrigen Tintenlöscherzusammensetzung oder einer pH-Wert-Änderung ausgesetzt ist, spezieller einer pH-Wert-Erhöhung, spezieller einer pH-Wert-Erhöhung auf einen Wert von mehr als etwa 9,0, insbesondere von mehr als 9,5.

15. Schreibinstrument, umfassend die nicht wässrige Schreibtinte nach einem der Ansprüche 1 bis 14, insbesondere ein Schreibinstrument, das mehr als etwa 50 mg der nicht wässrigen Schreibtinte pro 150 Meter Schrift abgibt.

## Revendications

1. Encre d'écriture non aqueuse comprenant un solvant, un agent gélifiant et un colorant hydrosoluble sensible au pH ;
dans laquelle le solvant est choisi parmi 1,2-propane-diol, diéthylène glycol, monoéthylène glycol et sulfoxyde de diméthyle et/ou mélanges de ceux-ci ;
dans laquelle l'agent gélifiant comprend des nanofibres de cellulose insolubles dans l'eau et/ou un mélange de particules de silice et d'au moins une cire d'amide d'acide gras ; et
dans laquelle le colorant hydrosoluble sensible au pH est capable de passer d'un état initialement coloré à un état décoloré lorsque l'encre d'écriture est exposée à une composition d'effaceur d'encre ou à un changement de pH, plus spécifiquement une augmentation de pH, plus spécifiquement une augmentation de pH jusqu'à une valeur de plus d'environ 9,0, en particulier de plus de 9,5.

2. Encre d'écriture selon la revendication 1, dans laquelle le colorant hydrosoluble sensible au pH a une solubilité dans l'eau distillée à environ 25 °C de plus d'environ 50 g/L.

3. Encre d'écriture selon la revendication 1 ou la revendication 2, dans laquelle le colorant hydrosoluble sensible au pH a une solubilité dans le 2-phénoxyéthanol à environ 25 °C inférieure à 1 g/L.

4. Encre d'écriture selon l'une quelconque des revendications 1 à 3, dans laquelle la composition d'effaceur d'encre est une composition aqueuse d'effaceur d'encre, en particulier une composition aqueuse d'effaceur d'encre ayant une valeur de pH de plus d'environ 9,0, plus spécifiquement de plus de 9,5 ; ou
dans laquelle le changement de pH est obtenu en appliquant une composition aqueuse d'effaceur d'encre, en particulier une composition aqueuse d'effaceur d'encre, en particulier une composition aqueuse d'effaceur d'encre ayant une valeur de pH de plus d'environ 9,0, plus spécifiquement de plus de 9,5.

5. Encre d'écriture selon l'une quelconque des revendications 1 à 4, dans laquelle la composition d'effaceur d'encre comprend un sulfite, un bisulfite, une amine ou des mélanges de ceux-ci.

6. Encre d'écriture selon l'une quelconque des revendications 1 à 5, dans laquelle le colorant hydrosoluble sensible au pH est choisi dans le groupe constitué par colorants triarylméthaniques, colorants méthiniques et colorants azométhiniques et mélanges de ceux-ci, plus particulièrement Bleu acide 90, Bleu acide 93, Violet acide 17, Violet acide 19, Rouge basique 13, Rouge basique 14, Rouge basique 15, Vert acide 3 et Jaune basique 49.

7. Encre d'écriture selon l'une quelconque des revendications 1 à 6, l'encre d'écriture non aqueuse comprenant entre environ 0,5 et environ 12 % en poids du colorant hydrosoluble sensible au pH, spécifiquement entre environ 1 et environ 10 % en poids du colorant hydrosoluble sensible au pH, et plus spécifiquement environ 2 et environ 8 % en poids du colorant hydrosoluble sensible au pH, par rapport au poids total de l'encre d'écriture.

8. Encre d'écriture selon l'une quelconque des revendications 1 à 7, l'encre d'écriture non aqueuse comprenant moins d'environ 5 % en poids d'eau, plus spécifiquement moins d'environ 2 % en poids d'eau, et en particulier moins d'environ 0,5 % en poids d'eau ; par rapport au poids total de l'encre d'écriture.

9. Encre d'écriture selon l'une quelconque des revendications 1 à 8, dans laquelle le solvant comprend 1,2-propane-diol et/ou monoéthylène glycol.

10. Encre d'écriture selon l'une quelconque des revendications 1 à 9, l'encre d'écriture non aqueuse comprenant plus d'environ 30 % en poids, plus spécifiquement plus d'environ 35 % en poids et en particulier plus d'environ 40 % en poids du solvant, par rapport au poids total de l'encre d'écriture.

11. Encre d'écriture selon l'une quelconque des revendications 1 à 10, l'encre d'écriture non aqueuse comprenant des nanofibres de cellulose insolubles dans l'eau en des quantités comprises entre environ 0,02 et environ 0,5 % en poids, plus spécifiquement entre environ 0,05 et environ 0,25 % en poids, et en particulier entre environ 0,08 et environ 0,2 % en poids, par rapport au poids total de l'encre.

12. Encre d'écriture selon l'une quelconque des revendications 1 à 11, l'encre d'écriture non aqueuse comprenant un homo- ou co-polymère de vinylpyrrolidone et/ou un alcool polyvinylique qui est acétalisé avec un aldéhyde comprenant entre 1 et environ 6 atomes de carbone, plus spécifiquement un homo- ou co-polymère de vinylpyrrolidone, en particulier une polyvinylpyrrolidone, en des quantités comprises entre environ 0,05 et environ 0,6 % en poids, en particulier entre environ 0,05 et environ 0,2 % en poids, par rapport au poids total de l'encre.

13. Encre d'écriture selon l'une quelconque des revendications 1 à 12, l'encre d'écriture non aqueuse comprenant en outre un agent viscosifiant, plus spécifiquement une résine choisie parmi résines de polyester, résines de polyuréthane, résines de cétone, résines de cétone-formaldéhyde, résines d'éther, résines de vinyle, alcools polyvinyliques, résines acryliques, résines styrène-acrylique, résines de copolymère styrène-acide maléique, résines de copolymère de colophane-acide maléique, résines phénoliques, résines cellulosiques, résines d'amide, résines d'alkyde, résines modifiées par colophane, résines phénoliques modifiées par colophane, résines de xylène, résines de polyacétal, résines terpéniques, résines de phénoxy ou un mélange de celles-ci ; qui sont facultativement présentes en une quantité comprise entre environ 3 et environ 35 %, spécifiquement entre environ 5 et environ 30 %, et en particulier entre environ 5 et environ 20 %, par rapport au poids total de l'encre.

14. Encre d'écriture selon l'une quelconque des revendications 1 à 13, l'encre d'écriture non aqueuse comprenant en outre un second colorant insoluble dans l'eau qui ne passe pas d'un état initialement coloré à un état décoloré lorsque l'encre d'écriture est exposée à une composition aqueuse d'effaceur d'encre ou à un changement de pH, plus spécifiquement une augmentation de pH, plus spécifiquement une augmentation de pH jusqu'à une valeur de plus d'environ 9,0, en particulier de plus de 9,5.

15. Instrument d'écriture comprenant l'encre d'écriture non aqueuse selon l'une quelconque des revendications 1 à 14, en particulier un instrument d'écriture qui distribue plus d'environ 50 mg de l'encre d'écriture non aqueuse pour 150 mètres d'écriture.
